(19) **Europäisches Patentamt / European Patent Office / Office européen des brevets**

(11) **EP 3 357 713 B1**

(12) **EUROPEAN PATENT SPECIFICATION**

(45) Date of publication and mention of the grant of the patent:
**06.11.2019 Bulletin 2019/45**

(21) Application number: **16851874.4**

(22) Date of filing: **30.09.2016**

(51) Int Cl.:
*B60C 9/08* (2006.01)   *B60C 9/02* (2006.01)
*B60C 15/00* (2006.01)   *B60C 15/06* (2006.01)

(86) International application number:
**PCT/JP2016/079078**

(87) International publication number:
**WO 2017/057705 (06.04.2017 Gazette 2017/14)**

(54) **CONSTRUCTION VEHICLE TIRE**

BAUFAHRZEUGREIFEN

PNEU D'UN VÉHICULE DE CONSTRUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2015 JP 2015196705**
**23.09.2016 JP 2016185614**

(43) Date of publication of application:
**08.08.2018 Bulletin 2018/32**

(73) Proprietor: **Bridgestone Corporation**
**Tokyo 104-8340 (JP)**

(72) Inventor: **KITORA, Atsushi**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
WO-A1-02/096676   JP-A- 2007 196 781
JP-A- 2009 113 715   JP-A- 2010 274 862
JP-A- 2012 183 966   JP-A- 2013 001 333
JP-A- 2014 516 009   JP-A- 2014 516 010
JP-A- 2014 516 011   JP-B2- 5 722 899

## Description

[Technical Field]

The present invention relates to a construction vehicle tire, in particular, a construction vehicle tire in which durability of a bead portion is improved.

[Background Art]

A large load is applied to a construction vehicle tire mounted to a construction vehicle that travels on an uneven road surface in a construction site and has a large loading mount, and therefore it is especially important to improve durability of a bead portion in order to lengthen a tire life.

In the construction tire used in the environment described above, a large compression strain is repeatedly generated in a carcass folded portion folded at a bead core from a carcass body portion toward an outer side in a tire radial direction, and therefore a method for reducing the compression strain is proposed. For example, a method for optimizing a distance between the carcass body portion and the carcass folded portion, specifically a distance between carcass cords in a section along a tire width direction (distance between cords), in accordance with a height position from the bead portion is known (see Patent Literature 1).

More specifically, it is proposed that the distance between the cords is set to be the minimum near the bead core, and then the distance is increased toward the outer side in the tire radial direction and is set to be the maximum at a predetermined height position from the bead portion. Attention is also drawn to the disclosures of JP-5-722899, JP-2014-516010 and JP-2014-516009.

[Citation List]

[Patent Literature]

[PTL 1] Japanese Unexamined Patent Application Publication No. 2009-113715 (pages 5 to 7 and Fig. 4)

[Summary of Invention]

According to the conventional construction vehicle tire described above, the compression strain generated in the carcass folded portion due to vertical force (Fz) can be reduced, however in an actual use environment, the compression strain is also generated in the carcass folded portion due to lateral force (Fy). That is, an inflection point of the carcass folded portion with respect to the compression strain in a state in which the lateral force is large is shifted from an inflection point of the carcass folded portion in a state in which the lateral force is small, and thereby it is found that the compression strain might not be always reduced effectively.

Specifically, in a state in which the lateral force is large, a position of the inflection point is moved toward an end portion of the carcass folded portion at the outer side in the tire radial direction, and therefore the compression strain might not be reduce effectively in a positional relation between the carcass body portion and the carcass folded portion in the conventional construction vehicle tire described above.

Accordingly, an object of the present invention is, in consideration of the problem described above, to provide a construction vehicle tire capable of reducing compression strain generated in a carcass folded portion even in a state closer to an actual use environment in which large lateral force is input, and capable of improving durability of a bead portion.

The present invention provides a construction vehicle tire as claimed in claim 1.

[Brief Description of Drawings]

[Fig. 1] Fig. 1 is a cross-sectional view along a tire width direction and a tire radial direction illustrating a part of a construction vehicle tire 1.
[Fig. 2] Fig. 2 is an enlarged cross-sectional view illustrating a bead portion 60 of the construction vehicle tire 1.
[Fig. 3] Fig. 3 is a view illustrating a specific positional relation between a carcass body portion 40 and a carcass folded portion 50 of the construction vehicle tire 1.
[Fig. 4] Fig. 4 is a view illustrating a specific shape of the carcass folded portion 50 of the construction vehicle tire 1.
[Fig. 5] Fig. 5 is an enlarged cross-sectional view of a bead portion 60 of a construction vehicle tire 1A.
[Fig. 6] Fig. 6 is a view illustrating a specific positional relation between a carcass body portion 40 and a carcass folded portion 50 of the construction vehicle tire 1A.
[Fig. 7] Fig. 7 is a schematic view for describing a compression deformation and a tensile deformation generated in the construction vehicle tire 1.
[Fig. 8]Fig. 8 is a graph illustrating a test result of construction vehicle tires according to a conventional example, a comparative example and examples.

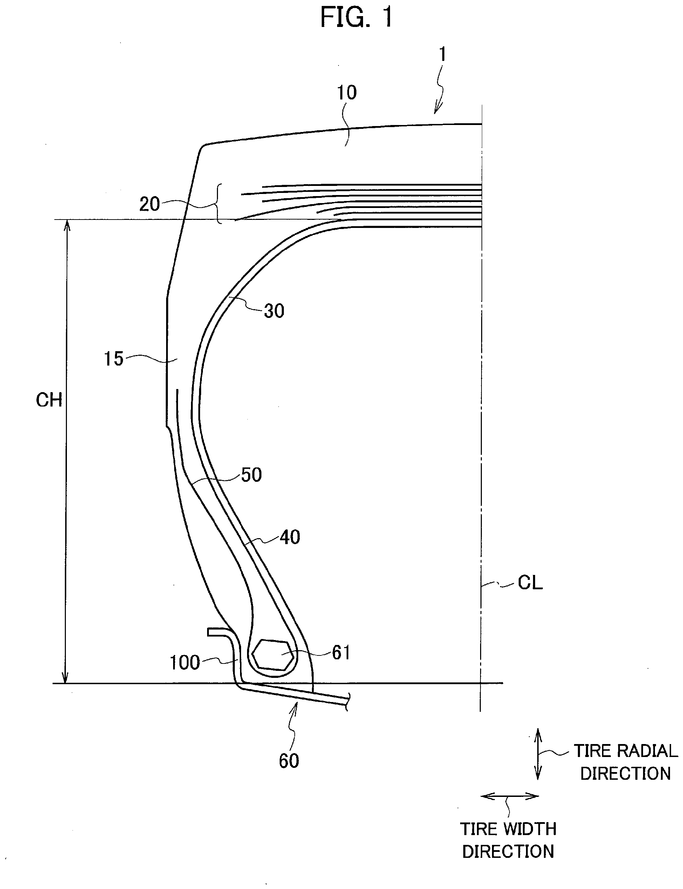

The tire shown in Fig. 1 to 4 is not according to the present invention but is useful for understanding it.

[Description of Embodiments]

First Embodiment

At first, a construction vehicle tire according to a first embodiment, which is not according to the present invention, but which is useful for understanding the present invention, will be described with reference to drawings.

(1) Schematic Configuration of Construction Vehicle Tire

Fig. 1 is a cross-sectional view along a tire width direction and a tire radial direction illustrating a part of a construction vehicle tire 1 according to the present embodiment. The construction vehicle tire 1 is formed symmetry in a lateral direction with respect to a tire equatorial line CL.

The construction vehicle tire 1 is preferably used as a construction vehicle tire used in, for example, a dump truck, an articulate dump truck, or a wheel loader that travels on crushed stones, or in a mine or a dam construction site. As shown in Fig. 1, the construction vehicle tire 1 is provided with a tread portion 10 that contacts with a road surface, a side wall portion 15 continued to the tread portion 10 and arranged at an inner side in the tire radial direction with respect to the tread portion 10, and a bead portion 60 continued to the side wall portion 15 and arranged at the inner side in the tire radial direction with respect to the side wall portion 15.

A belt layer 20 formed by a plurality of belts (for example, 4 to 6 sheets) with a cord is arranged at the inner side in the tire radial direction of the tread portion 10. Further, a pattern (not shown) in accordance with a use environment of the construction vehicle tire 1 or a kind of a construction vehicle to which the construction vehicle tire 1 is mounted is formed in the tread portion 10.

Further, a carcass layer 30 that forms a frame of the construction vehicle tire 1 is arranged at the inner side in the tire radial direction of the belt layer 20 between a pair of right and left bead cores 61.

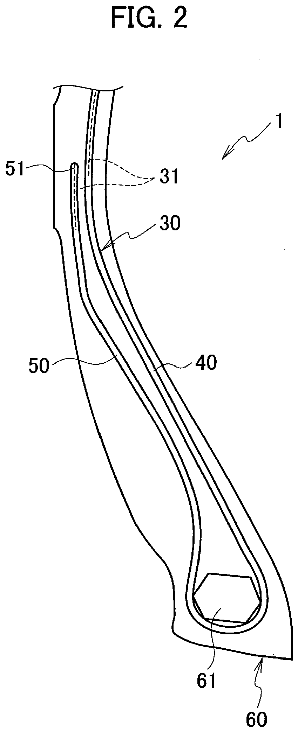

In the present embodiment, the carcass layer 30 is formed as a radial structure having a carcass cord 31 (not shown in FIG. 1, see FIG. 2) radially arranged along the tire radial direction. However, it is not limited to the radial structure, and therefore a bias structure in which the carcass cord is arranged to cross the tire radial direction may be adopted.

Further, as shown in Fig. 1, the construction vehicle tire 1 is formed as a pneumatic tire. The gas filled into the construction vehicle tire 1 mounted to a wheel rim 100 is not limited to air, and therefore an inert gas such as a nitrogen gas may be filled. Further, a liquid for cooling (coolant) may be filled.

(2) Configuration of Bead Portion

Fig. 2 is an enlarged cross-sectional view illustrating the bead portion 60 of the construction vehicle tire 1. As shown in Fig. 2, the carcass layer 30 is formed by a carcass body portion 40 and a carcass folded portion 50. Each of the carcass body portion 40 and the carcass folded portion 50 has a structure in which the carcass cord 31 is covered with rubber.

The carcass body portion 40 is located at a portion from the tread portion 10 (see Fig. 1) to a bead core 61 so as to form a body portion of the carcass layer 30. The carcass folded portion 50 is continued to the carcass body portion 40 and folded at the bead core 61 from an inner side in the tire width direction toward an outer side in the tire width direction. The carcass folded portion 50 is extended from the bead core 61 toward the outer side in the tire radial direction. An end portion 51 of the carcass folded portion 50 terminates in the side wall portion 15.

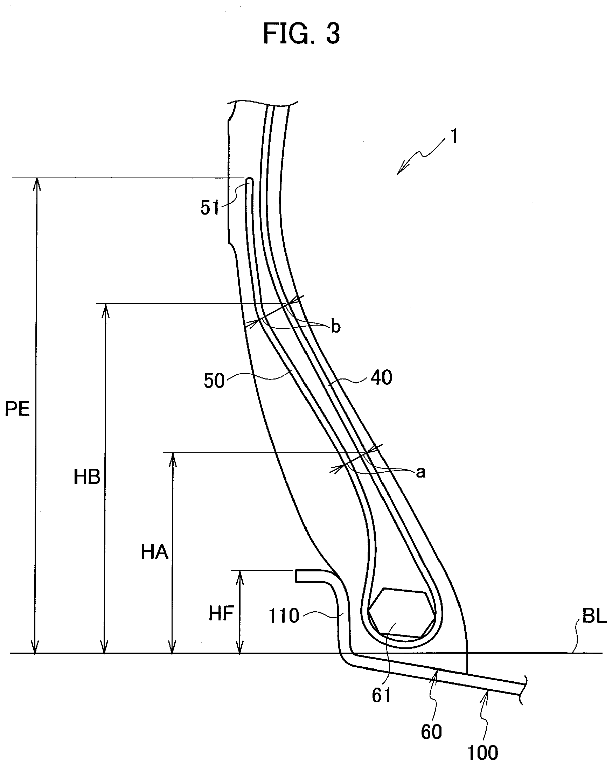

Fig. 3 shows a specific positional relation between the carcass body portion 40 and the carcass folded portion 50 of the construction vehicle tire 1. As shown in Fig. 3, a distance between cords, which is defined by a distance between the carcass cord 31 of the carcass body portion 40 and the carcass cord 31 of the carcass folded portion 50, becomes smaller from the bead core 61 toward the outer side in the tire radial direction to a minimum value a. After becoming the minimum value a, the distance between the cords becomes larger toward the outer side in the tire radial direction to a maximum value b.

Further, the distance between the cords is defined by a distance (gap), in a section along the tire width direction and the tire radial direction as shown in Fig. 2, between the carcass cord 31 of the carcass body portion 40 and the carcass cord 31 of the carcass folded portion 50 with respect to a tangent line of the carcass cord 31 of the carcass body portion 40 as a reference. More specifically, the distance between the cords is defined by a distance between a center in a thickness direction of the carcass cord 31 of the carcass body portion 40 and a center in a thickness direction of the carcass cord 31 of the carcass folded portion 50.

When the construction vehicle tire 1 is mounted to the wheel rim 100 as an applicable rim, a height HA of the carcass cord 31 of the carcass body portion 40 corresponding to the minimum value a from a base line BL of the wheel rim 100, a height HB of the carcass cord 31 of the carcass body portion 40 corresponding to the maximum value b from the base line BL, and a height HF of a rim flange 110 of the wheel rim 100 from the base line BL fulfill the following relations.

$$1.2 \, \mathrm{HF} \leq \mathrm{HA} \leq 2.5 \, \mathrm{HF}$$

$$3.1 \, \mathrm{HF} \leq \mathrm{HB} \leq 4.5 \, \mathrm{HF}$$

Here, the base line BL is a straight line parallel to a rotation axis of the wheel rim 100 and passing an end portion (bead heel) at the outer side in the tire radial direction of the bead portion 60.

Further, the applicable rim is, for example, a wheel rim having a standard size defined in Year Book of Japan Automobile Tyre Manufacturers Association (JATMA), and the heights HA, HB, HF are measured in a state in which measurement conditions (mounting to the applicable rim, setting of defined inner pressure, setting temperature or the like) defined in JATMA are fulfilled. Here, other standard (TRA, ETRTO or the like) may be adopted instead of JATMA.

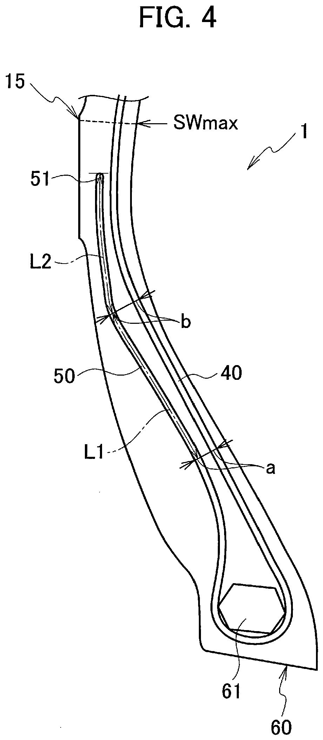

Fig. 4 shows a specific shape of the carcass folded portion 50 of the construction vehicle tire 1. As shown in Fig. 4, a distance along the carcass cord 31 of the carcass folded portion 50 between a position of the minimum value a and a position of the maximum value b is defined as a distance L1. Further, a distance along the carcass cord 31 of the carcass folded portion 50 between the position of the maximum value b and the end portion 51 at the outer side in the tire radial direction of the carcass folded portion 50 is defined as a distance L2.

In the construction vehicle tire 1, the distance L1 is longer than the distance L2. That is, in the positional relation between the minimum value a, the maximum value b and the end portion 51 of the carcass folded portion 50 in the tire radial direction, a portion of the maximum value b is located at the outer side in the tire radial direction compared to that in a conventional example (described below).

The end portion 51 of the carcass folded portion 50 terminates near a position of a maximum width SWmax in which a width of the side wall portion 15 in the tire width direction is the maximum. Further, it is preferable that the end portion 51 terminates at the inner side in the tire radial direction with respect to the portion of the maximum width SWmax. Accordingly, a position in the tire radial direction of the maximum value b is also located at the inner side in the tire radial direction with respect to the portion of the maximum width SWmax. Or alternatively, it is preferable that the position in the tire radial direction of the maximum value b is located at the outer side in the tire radial direction with respect to a position of a half of a height from the base line BL (see Fig. 3) to the portion of the maximum width SWmax.

Further, in a thickness relation in a rubber gage in the position of the maximum value b, a thickness between a tire surface and an outer side surface in the tire width direction of the carcass folded portion 50 is thinner than a thickness between an inner side surface in the tire width direction of the carcass folded portion 50 and an outer side surface in the tire width direction of the carcass body portion 40. On the other hand, a thickness relation in the rubber gage in the position of the minimum value a is opposite to the thickness relation in the position of the maximum value b, and therefore a thickness between the tire surface and the outer side surface of the tire width direction of the carcass folded portion 50 is thicker than a thickness between the inner side surface in the tire width direction of the carcass folded portion and the outer side surface in the tire width direction of the carcass body portion 40.s

In the present embodiment, the number of the portions of the maximum value b is only one between the bead core 61 and the end portion 51 of the carcass folded portion 50. However, the number of the portions of the maximum value b is not necessarily one. Further, in the present embodiment, a ratio b/a of the minimum value a and the maximum value b is equal to or more than 1.10 and less than 2.00.

Second Embodiment

Next, a second embodiment, which is according to the present invention, will be described. Hereinafter, a difference from the construction vehicle tire 1 according to the first embodiment described above will be mainly described, and therefore a description of a configuration similar to that in the construction vehicle tire 1 will be omitted as needed.

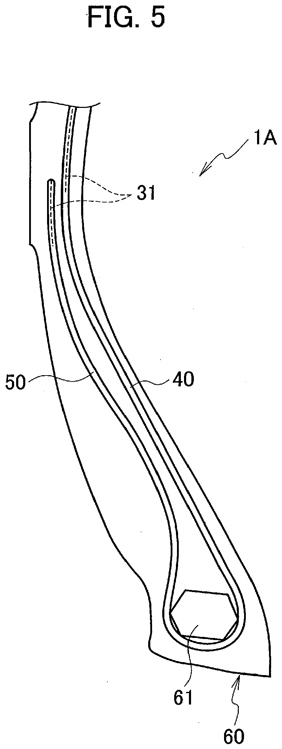

Fig. 5 is an enlarged cross-sectional view of a bead portion 60 of a construction vehicle tire 1A according to the present embodiment. Each configuration of a tread portion 10 and a belt layer 20 of the construction vehicle tire 1A is similar to that of the construction vehicle tire 1. As shown in Fig. 5, in the construction vehicle tire 1A, a shape (positional relation) of a carcass folded portion 50 is different from that in the construction vehicle tire 1.

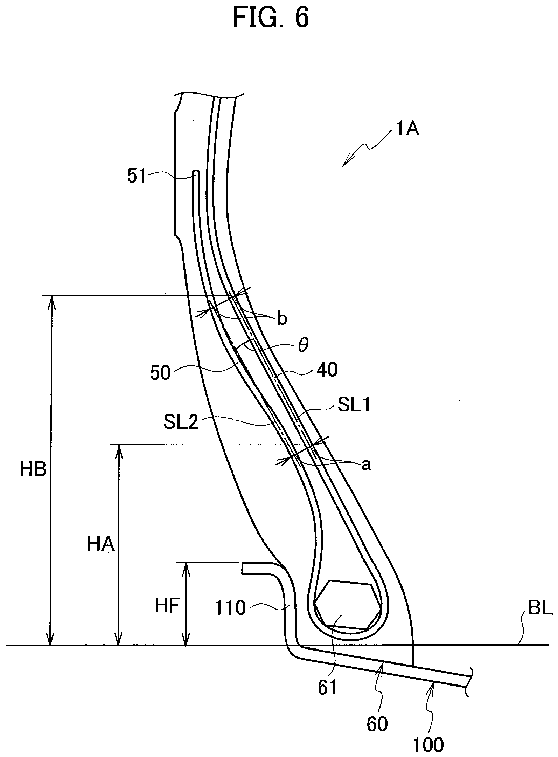

Fig. 6 shows a specific positional relation of a carcass body portion 40 and the carcass folded portion 50 of the construction vehicle tire 1A. As shown in Fig. 6, when the construction vehicle tire 1A is mounted to a wheel rim 100, a height HA of the carcass cord 31 of the carcass body portion 40 corresponding to the minimum value a from a base line BL of the wheel rim 100, a height HB of the carcass cord 31 of the carcass body portion 40 corresponding to the maximum value b from the base line BL, and a height HF of a rim flange 110 of the wheel rim 100 from the base line BL fulfill the following relations.

$$1.2\,\mathrm{HF} \leq \mathrm{HA} \leq 2.5\,\mathrm{HF}$$

$$2.6\,\mathrm{HF} \leq \mathrm{HB} \leq 3.5\,\mathrm{HF}$$

$$1.10 \leq \mathrm{b/a} < 1.40$$

Further, a crossing angle θ between a straight line SL1 passing a position of the carcass cord 31 of the carcass body portion 40 corresponding to the minimum value a and a position of the carcass cord 31 of the carcass body portion 40 corresponding to the maximum value b, and a straight line SL2 passing a position of the carcass cord 31 of the carcass folded portion 50 corresponding to the minimum value a and a position of the carcass cord 31 of the carcass folded portion 50 corresponding to the maximum value b fulfills the following relation.

$$2.00° \leq \theta \leq 5.00°$$

In this way, the crossing angle θ is small, and therefore in the construction vehicle tire 1A, the maximum value b of the distance between the cords is small compared to the conventional example and the construction vehicle tire 1.

Here, similar to the construction vehicle tire 1 according to the first embodiment, the number of the portions of the maximum value b is only one between the bead core 61 and the end portion 51 of the carcass folded portion 50. However, the number of the portions of the maximum value b is not necessarily one.

Further, in the construction vehicle tire 1A, it is preferable that a height CH (case height) of a carcass line of the tread portion 10 of the construction vehicle tire 1A from the base line BL and a height PE (carcass folded portion height) of the end portion 51 of the carcass folded portion 50 from the base line BL fulfill the following relation.

$$0.50 \leq PE/CH \leq 0.58$$

Here, the carcass line of the tread portion 10 denotes a straight line passing an outer edge in the tire radial direction of the carcass layer 30 (carcass body portion 40) and parallel to the tire width direction.

Functions and Effects

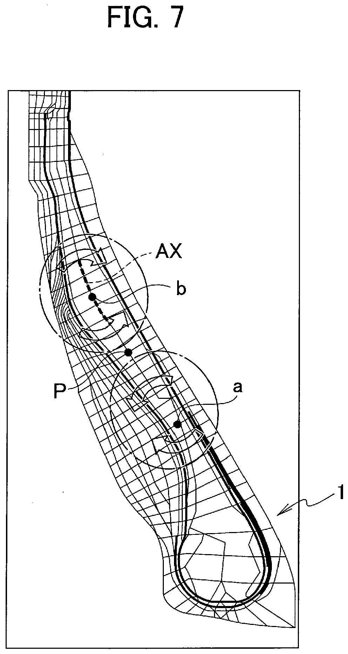

Fig. 7 is a schematic view for describing a compression deformation and a tensile deformation generated in the construction vehicle tire 1. As shown in Fig. 7, when a load is applied to the construction vehicle tire 1, the compression deformation is generated in the carcass folded portion 50 near the portion in which the distance between the cords becomes the minimum value a. On the other hand, the tensile deformation is generated in the carcass folded portion 50 near the portion in which the distance between the cords becomes the maximum value b.

The carcass cord 31 of the carcass folded portion 50 gradually extends to the outer side in the tire width direction from the position of the minimum value a toward the position of the maximum value b. That is, the carcass cord 31 of the carcass folded portion 50 gradually goes away from the carcass cord 31 of the carcass body portion 40. Thus, even if the compression deformation is generated in the carcass cord 31 of the carcass body portion 40, buckling of the carcass folded portion 50, more specifically meandering of the carcass cord 31 of the carcass folded portion 50 being bent due to the compression deformation, can be suppressed.

The distance between the cords is ensured sufficiently near the position of the maximum value b, and therefore the position of the carcass cord 31 of the carcass folded portion 50 is sufficiently separated from a neutral axis AX of bending near the position of the maximum value b. Thus, the carcass folded portion 50 can be further adapted to the tensile deformation and the tensile deformation near the position of the maximum value b is expanded. As a result, the compression deformation near the position of the minimum value a can be also suppressed.

Further, in the construction vehicle tire 1, the maximum value b is located at the outer side in the tire radial direction compared to the conventional example, and thereby in a case in which the tensile deformation or the compression deformation is generated in the construction vehicle tire 1, especially even in a state in which the lateral force (Fy) is large, it can be firmly avoided that an inflection point P between the tensile deformation and the compression deformation is located at the outer side in the tire radial direction with respect to the position of the maximum value b (reverse phenomenon).

Such an effect is similarly obtained in the construction vehicle tire 1A in which the maximum value b of the distance between the cords is set to be small. In the construction vehicle tire 1A, a degree of adaption to the tensile deformation is restricted compared to the construction vehicle tire 1, however by setting the maximum value b to be small, dispersion of the structural rigidity is less and shift of the inflection point P is less, and thereby the reverse phenomenon described above can be suppressed.

Further, in the construction vehicle tire 1A, in a case in which the CH (case height) and the PE (carcass folded portion height) fulfill the relation of $0.50 \leq PE/CH \leq 0.58$, the distance between the cords becomes larger to the maximum value b after becoming the minimum value a toward the outer side in the tire radial direction, and in a case in which the heights HA, HB of the carcass cords 31, the height HF of the rim flange 110 of the wheel rim 100 from the base line BL fulfill the relations described above, separation in an end portion of the belt layer 20, so-called ply end separation (PES), can be suppressed effectively.

Specifically, when the lateral force (Fy) is input into the construction vehicle tire 1A, the construction tire 1A is deformed as a whole, and therefore in a structure in which the distance between the cords becomes larger to the maximum value b after becoming the minimum value a toward the outer side in the tire radial direction, the ply end separation might be led depending on a position of the end portion 51 of the carcass folded portion 50.

Accordingly, by setting the relation between the CH (case height) and the PE (carcass folded portion height) to be in a range of $0.50 \leq PE/CH \leq 0.58$, an appropriate distance between the end portion 51 and the belt layer 20 can be ensured while reducing the compression strain generated in the carcass folded portion 50, and therefore the ply end separation can be effectively suppressed. Here, in a case in which the relation between the CH (case height) and the PE (carcass folded portion height) is out of the range described above, the effect of the suppression of the ply end separation (PES) or the reduction of the compression strain generated in the carcass folded portion 50 is restrictive.

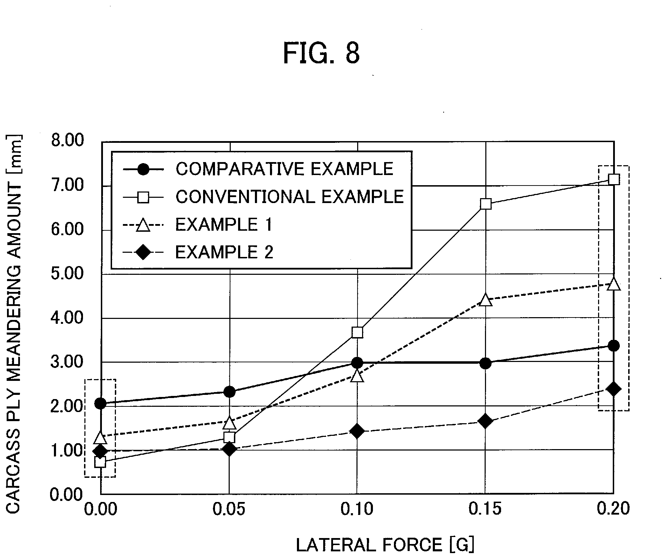

Fig. 8 shows a test result of construction vehicle tires according to the conventional example, a comparative example, and examples (example 1, and example 2). Example 1 is not according to the present invention. The conventional example shown in Fig. 8 is formed as a construction vehicle tire disclosed in a prior art (JP 2009-113715 A). The comparative example is formed as a construction vehicle tire without a portion having a convex shape such as the portion of the maximum value b in the carcass folded portion 50. The example 1 is formed as the construction vehicle tire 1, and the example 2 is formed as the construction vehicle tire 1A. Further, an example 3 is formed as the construction vehicle tire 1A in which the CH (case height) and the PE (carcass folded portion height) fulfill the relation described above. A basic configuration of the example 3 is similar to that of the example 2.

Specifically, the example 1 has the following setting values.

HA = 2.06 HF
HB = 3.55 HF
b/a = 1.34

The example 2 has the following setting values.

HA = 2.06 HF
HB = 3.00 HF
b/a = 1.34
θ = 4°

The example 3 further has the following setting value.

PE/CH = 0.56
Here, a size of each of the construction vehicle tires used in the test is 59/80R63.

As shown in Fig. 8, in the construction vehicle tires according to the conventional example, and the examples 1, 2, in a state in which the lateral force (Fy) is not input and the vertical force (Fz) is only input (lateral force = 0.00G), a meandering amount (buckling) of the carcass layer (ply) is suppressed at a low level. On the other hand, in the comparative example, in a state in which the vertical force (Fz) is only input, the meandering amount is relatively large. Here, the vertical force (Fz) is set to 120 t.

As the lateral force is increased, the meandering amount is increased in the conventional example. That is, the carcass layer is not sufficiently adapted to the compression deformation. On the other hand, in the comparative example, and the examples 1, 2 (especially, the example 2), even when the lateral force is increased, the meandering amount is not extremely increased, and therefore those tires can be adapted to the actual use environment.

In this way, according to the construction vehicle tire 1 according to the first embodiment (example 1) and the construction vehicle tire 1A according to the second embodiment (example 2), the minimum value a and the maximum value b of the distance between the cords, HA, HB, HF, b/a, and θ (in a case of the example 2) fulfill the relations described above. With this, in a state closer to the actual environment in which the large lateral force is input, the compression strain generated in the carcass folded portion 50 can be reduced, and the durability of the bead portion 60 can be improved.

Here, in a case in which HA, HB, HF, b/a, and θ do not fulfill the relations described above, the characteristics of the example 1 and the example 2 shown in Fig. 8 are not obtained, and therefore the improvement of the durability of the bead portion 60 is restrictive.

Further, as shown in Fig. 8, according to the construction vehicle tire 1 and the construction vehicle tire 1A, in a state in which the vertical force (Fz) is only input, the meandering amount (buckling) of the carcass layer (ply) is suppressed at a low level, and therefore any adverse influence is not exerted to the durability of the bead portion 60.

Further, in a case of the example 3, it is found that the ply end separation (PES) is reduced by approximately 20 % compared to the example 1 and the example 2 in an evaluation test. Specifically, in a case in which PE/CH is less than 0.50 and in a case in which PE/CH is more than 0.58, the ply end separation tends to increase.

That is, when PE/CH fulfills the relation of 0.50 ≤ PE/CH ≤ 0.58, the ply end separation (PES) can be also suppressed effectively.

Other Embodiments

As described above, although the content of the present invention was disclosed through the embodiment of the present invention, the embodiment of the present invention may be modified, for example, in the following manner.

For example, the embodiment described above presuppose a construction vehicle tire used in a dump truck, an articulate dump truck, or a wheel loader that travels on crushed stones, or in a mine or a dam construction site, however the scope of application of the present invention is not necessarily limited to such a construction vehicle tire. For example, the present invention may be applied to a construction vehicle tire used in a construction vehicle other than a dump truck that travels in a construction site, or on uneven ground or muddy ground.

Further, the number of the belt layers 20 or the like is one example, and therefore a configuration of the belt layer 20 may be modified as needed in accordance with usage of the construction vehicle tire.

In this way, it is obvious that the present invention includes various embodiments not described herein. Accordingly, the scope of the present invention is defined only by technical features described in Claims reasonable based on the above-description.

[Industrial Applicability]

According to the features of the present invention, a construction vehicle tire capable of reducing compression strain generated in a carcass folded portion even in a state closer to an actual use environment in which large lateral force is input, and capable of improving durability of a bead portion, can be provided.

[Reference Signs List]

| 1, 1A: | construction vehicle tire |
|---|---|
| 10: | tread portion |
| 15: | side wall portion |
| 20: | belt layer |
| 30: | carcass layer |
| 31: | carcass cord |
| 40: | carcass body portion |
| 50: | carcass folded portion |
| 51: | end portion |
| 60: | bead portion |
| 61: | bead core |
| 100: | wheel rim |
| 110: | rim flange |

**Claims**

**1.** A construction vehicle tire (1A) comprising:

a carcass body portion (40) formed by a covered carcass cord (31); and
a carcass folded portion (50) continued to the carcass body portion (40) and folded at a bead core (61) from an inner side in a tire width direction toward an outer side in the tire width direction, the carcass folded portion (50) being formed by a covered carcass cord (31), wherein a distance between cords, which is defined by a distance between the carcass cord (31) of the carcass body portion (40) and the carcass cord (31) of the carcass folded portion (50), becomes smaller from the bead core (61) toward an outer side in a tire radial direction to a minimum value a, and after the distance between the cords become the minimum value a, the distance between the cords becomes larger toward the outer side in the tire radial direction to the maximum value b, wherein the distance between the cords is defined by a distance between a center in a thickness direction of the carcass cord (31) of the carcass body portion (40) and a center in a thickness direction of the carcass cord (31) of the carcass folded portion (50);
and wherein, when the construction vehicle tire (1A) is mounted to an applicable rim (100) and inflated to defined inner pressure according to a prescribed standard, a height HA of the carcass cord (31) of the carcass body portion (40) corresponding to the minimum value a from a base line of the applicable rim (100), a height HB of the carcass cord (31) of the carcass body portion (40) corresponding to the maximum value b from the base line of the applicable rim (100), and a flange height HF of the applicable rim (100) from the base line of the applicable rim (100) fulfill relations of

$$1.2 \, \text{HF} \leq \text{HA} \leq 2.5 \, \text{HF}$$

$$2.6 \, \text{HF} \leq \text{HB} \leq 3.5 \, \text{HF}$$

$$1.10 \leq b/a < 1.40;$$

**characterised in that**
a crossing angle $\theta$ between a straight line SL1 passing a position of the carcass cord of the carcass body portion (40) corresponding to the minimum value a and a position of the carcass cord of the carcass body portion (40) corresponding to the maximum value b, and a straight line SL2 passing a position of the carcass cord of the carcass folded portion (50) corresponding to the minimum value a and a position of the carcass cord of the carcass folded portion (50) corresponding to the maximum value b fulfill a relation of

$$2.00° \leq \theta \leq 5.00°.$$

**2.** The construction vehicle tire (1A) according to claim 1, wherein a height CH of a carcass line of a tread portion (10) of the construction vehicle tire (1A) from the base line of the applicable rim (100) and a height PE of an end portion of the carcass folded portion (50) from the base line of the applicable rim (100) fulfill a relation of

$$0.50 \leq \text{PE/CH} \leq 0.58,$$

and
wherein the carcass line of the tread portion (10) denotes a straight line passing an outer edge in the tire radial direction of the carcass body portion (40) and parallel to the tire width direction.

**3.** The construction vehicle tire (1A) according to claim 1, wherein the number of the portions of the maximum value b is only one between the bead core (61) and the end portion at the outer side in the tire radial direction of the carcass folded portion (50).

**Patentansprüche**

**1.** Baufahrzeugreifen (1A), umfassend:

einen Karkassenkörperabschnitt (40), welcher aus einem beschichteten Karkassenkord (31) gebildet ist; und
einen gefalteten Karkassenabschnitt (50), welcher eine Fortsetzung des Karkassenkörperabschnitts (40) ist und an einem Wulstkern (61) von einer Innenseite in einer Reifenbreitenrichtung zu einer Außenseite in der Reifenbreitenrichtung gefaltet ist, wobei der gefaltete Karkassenabschnitt (50) durch einen beschichteten Karkassenkord (31) gebildet ist,
wobei
ein Abstand zwischen den Korden, welcher durch einen Abstand zwischen dem Karkassenkord (31) des Karkassenkörperabschnitts (40) und dem Karkassenkord (31) des gefalteten Karkassenabschnitts (50) definiert ist, vom Wulstkern (61) zu einer Außenseite hin in einer Reifenradialrichtung bis zu einem minimalen Wert a abnimmt, und nachdem der Abstand zwischen den Korden den minimalen Wert a angenommen hat, der Abstand zwischen den Korden zu einer Außenseite hin in der Reifenradialrichtung bis zu einem maximalen Wert b zunimmt, wobei der Abstand zwischen den Korden durch einen Abstand zwischen einem Mittelpunkt in einer Dickenrichtung des Karkassenkords (31) des Karkassenkörperabschnitts (40) und einem Mittelpunkt in einer Dickenrichtung des Karkassenkords (31) des gefalteten Karkassenabschnitts (50) definiert ist;
und wobei, wenn der Baufahrzeugreifen (1A) auf einer geeigneten Felge (100) montiert und bis auf einem definierten Innendruck gemäß einer vorgeschriebenen Norm aufgeblasen ist, eine Höhe HA des Karkassenkords (31) des Karkassenkörperabschnitts (40), die einem minimalen Wert a von einer Basislinie der geeigneten Felge (100) entspricht, eine Höhe HB des Karkassenkords (31) des Karkassenkörperabschnitts (40), die einem maximalen Wert b von der Basislinie der geeigneten Felge (100) entspricht, und eine Flanschhöhe HF der geeigneten Felge (100) von der Basislinie der geeigneten Felge (100), die folgenden Beziehungen erfüllen:

$$1{,}2\ HF < HA < 2{,}5\ HF$$

$$2{,}6\ HF < HB < 3{,}5\ HF$$

$$1{,}10 < b/a < 1{,}40;$$

**dadurch gekennzeichnet, dass**
ein Schneidwinkel θ zwischen einer Geraden SL1, die durch eine Position des Karkassenkords des Karkassenkörperabschnitts (40), die einem minimalen Wert a entspricht und eine Position des Karkassenkords des Karkassenkörperabschnitts (40), die einem maximalen Wert b entspricht, hindurchgeht, und eine Gerade SL2, die durch eine Position des Karkassenkords des gefalteten Karkassenabschnitts (50), die dem minimalen Wert a entspricht, und eine Position des Karkassenkords des gefalteten Karkassenabschnitts (50), die dem maximalen Wert b entspricht, hindurchgeht, die folgende Beziehung erfüllt

$$2{,}00° < θ < 5{,}00°.$$

**2.** Baufahrzeugreifen (1A) nach Anspruch 1, wobei eine Höhe CH einer Karkassenlinie eines Laufflächenabschnitts (10) des Baufahrzeugreifens (1A) von der Basislinie der geeigneten Felge (100) und eine Höhe PE eines Endabschnitts des gefalteten Karkassenabschnitts (50) von der Basislinie der geeigneten Felge (100) die folgende Beziehung erfüllen

$$0{,}50 < PE/CH < 0{,}58,$$

und
wobei die Karkassenlinie des Laufflächenabschnitts (10) eine gerade Linie darstellt, die durch einen Außenrand in der Reifenradialrichtung des Karkassenkörperabschnitts (40) hindurchgeht und parallel zur Reifenbreitenrichtung läuft.

**3.** Baufahrzeugreifen (1A) nach Anspruch 1, wobei die Anzahl von Abschnitten des maximalen Werts b nur eins zwischen dem Wulstkern (61) und dem Endabschnitt an der Außenseite in der Reifenradialrichtung des gefalteten Karkassenabschnitts (50) beträgt.

**Revendications**

**1.** Pneumatique de véhicule de construction (1A) comprenant :

une section de corps de carcasse (40) qui est formée par un câble de carcasse revêtu (31) ; et

une section repliée de carcasse (50) qui est en continuité par rapport à la section de corps de carcasse (40) et qui est repliée au niveau d'un corps de talon (61) depuis un côté interne dans une direction de largeur de pneumatique en direction d'un côté externe dans la direction de largeur de pneumatique, la section repliée de carcasse (50) étant formée par un câble de carcasse revêtu (31) ;

dans lequel une distance entre les câbles, qui est définie par une distance entre le câble de carcasse (31) de la section de corps de carcasse (40) et le câble de carcasse (31) de la section repliée de carcasse (50), devient plus petite depuis le corps de talon (61) en direction d'un côté externe dans une direction radiale de pneumatique jusqu'à une valeur minimum a, et après que la distance entre les câbles est devenue égale à la valeur minimum a, la distance entre les câbles devient plus grande en direction du côté externe dans la direction radiale de pneumatique jusqu'à la valeur maximum b, dans lequel la distance entre les câbles est définie par une distance entre un centre dans une direction d'épaisseur du câble de carcasse (31) de la section de corps de carcasse (40) et un centre dans une direction d'épaisseur du câble de carcasse (31) de la section repliée de carcasse (50) ;

et dans lequel, lorsque le pneumatique de véhicule de construction (1A) est monté sur une jante en vigueur (100) et est gonflé jusqu'à une pression interne définie conformément à un standard prescrit, une hauteur HA du câble de carcasse (31) de la section de corps de carcasse (40) qui correspond à la valeur minimum a par rapport à une ligne de base de la jante en vigueur (100), une hauteur HB du câble de carcasse (31) de la section de corps de carcasse (40) qui correspond à la valeur maximum b par rapport à la ligne de base de la jante en vigueur (100) et une hauteur de rebord HF de la jante en vigueur (100) par rapport à la ligne de base de la jante en vigueur (100) satisfont les relations :

$$1{,}2\,HF \leq HA \leq 2{,}5\,HF$$

$$2{,}6\,HF \leq HB \leq 3{,}5\,HF$$

$$1{,}10 \leq b/a < 1{,}40 \; ;$$

**caractérisé en ce que** :

un angle d'intersection θ entre une ligne droite SL1 qui passe par une position du câble de carcasse de la section de corps de carcasse (40) qui correspond à la valeur minimum a et par une position du câble de carcasse de la section de corps de carcasse (40) qui correspond à la valeur maximum b, et une ligne droite SL2 qui passe par une position du câble de carcasse de la section repliée de carcasse (50) qui correspond à la valeur minimum a et par une position du câble de carcasse de la section repliée de carcasse (50) qui correspond à la valeur maximum b satisfait la relation :

$$2{,}00° \leq \theta \leq 5{,}00°.$$

2.  Pneumatique de véhicule de construction (1A) selon la revendication 1, dans lequel une hauteur CH d'une ligne de carcasse d'une section de bande de roulement (10) du pneumatique de véhicule de construction (1A) par rapport à la ligne de base de la jante en vigueur (100) et une hauteur PE d'une section d'extrémité de la section repliée de carcasse (50) par rapport à la ligne de base de la jante en vigueur (100) satisfont la relation :

$$0{,}50 \leq PE/CH \leq 0{,}58 \; ;$$

et

dans lequel la ligne de carcasse de la section de bande de roulement (10) représente une ligne droite qui passe par un bord externe dans la direction radiale de pneumatique de la section de corps de carcasse (40) et qui est parallèle à la direction de largeur de pneumatique.

3.  Pneumatique de véhicule de construction (1A) selon la revendication 1, dans lequel le nombre des sections de la valeur maximum b est seulement égal à l'unité entre le corps de talon (61) et la section d'extrémité au niveau du côté externe dans la direction radiale de pneumatique de la section repliée de carcasse (50).

# FIG. 1

TIRE RADIAL
DIRECTION

TIRE WIDTH
DIRECTION

# FIG. 2

# FIG. 3

# FIG. 4

# FIG. 5

# FIG. 6

## FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5722899 A
- JP 2014516010 A
- JP 2014516009 A
- JP 2009113715 A